# EUROPÄISCHE PATENTSCHRIFT

(11) **EP 0 752 436 B1**
(45) Veröffentlichungstag und Bekanntmachung des Hinweises auf die Patenterteilung: **08.03.2000**
(21) Anmeldenummer: 96110704.2
(22) Anmeldetag: 03.07.1996
(51) Int. Cl.: C08G 18/62, C09D 175/04

(54) **Überzugsmittel, dessen Verwendung und Verfahren zur Mehrschichtlackierung**
Coating composition, its use and process for multilayer coating
Composition de revêtement, son utilisation et procédé pour la préparation d'un revêtement multicouche

(30) Priorität: 07.07.1995 DE 19524787
(43) Veröffentlichungstag der Anmeldung: 08.01.1997
(73) Patentinhaber: Herberts Gesellschaft mit beschränkter Haftung, 42285 Wuppertal (DE)
(72) Erfinder: Bremer, Gerhard, 50226 Frechen (DE); Kerber, Hermann, 42369 Wuppertal (DE); Krumme, Manfred, 50374 Erftstadt (DE); Ley, Olaf, 42329 Wuppertal (DE); Stephan, Werner, 42111 Wuppertal (DE)
(74) Vertreter: Türk - Gille - Hrabal - Struck

(56) Entgegenhaltungen:
- EP-A- 0 349 818
- DE-A- 4 320 727
- US-A- 5 279 862

## Beschreibung

Die Erfindung betrifft zweikomponentige Überzugsmittel auf der Basis von hydroxyfunktionellen (Meth)acrylcopolymerisaten und von Polyisocyanaten, die in pigmentierter oder nicht-pigmentierter Form eingesetzt werden können und sich durch eine rasche Trocknung auszeichnen. Sie weisen einen hohen Festkörpergehalt auf und finden insbesondere Anwendung in der Fahrzeug- und Fahrzeugteilelackierung.

Zweikomponentige Überzugsmittel auf Basis einer Polyhydroxyl- und einer Polyisocyanatkomponente sind seit langem bekannt. Man erhält aus diesen Überzugsmitteln qualitativ hochwertige Überzüge mit sehr guter Chemikalien- und Lösemittelbeständigkeit sowie einem hohen optischen und mechanischen Eigenschaftsniveau. Im Rahmen allgemeiner ökologischer Forderungen ist man bestrebt, den Lösemittelgehalt bzw. den Anteil flüchtiger organischer Verbindungen (VOC) in derartigen lösemittelhaltigen Überzugsmitteln so gering wie möglich zu halten und einen hohen Festkörpergehalt im spritzfertigen Zustand zu erzielen. Diese sogenannten High-Solid-Lacke (niedriger VOC-Wert) sind eine umweltrelevante Alternative zu wasserverdünnbaren Überzugsmitteln.

In der DE-A-43 20 727 werden lösemittelbasierende Überzugsmittel auf Basis von Polyisocyanaten und hydroxyfunktionellen (Meth)acrylcopolymeren beschrieben, die kurze Trocknungszeiten aufweisen und sich störungsfrei in nur einem Spritzgang applizieren lassen. Die Hydroxylkomponente wird erhalten aus aromatischen Vinylverbindungen, Hydroxyalkylmethacrylaten, Alkyl(meth)acrylaten und (Meth)acrylsäure. Bei diesen Überzugsmitteln handelt es sich jedoch nicht um High-Solid-Lacke. Der Lösemittelgehalt der fertigen Überzugsmittel ist noch unbefriedigend hoch.

In der DE-A-43 10 414 werden nicht-wäßrige Klarlacke auf Polyacrylat/Polyisocyanat-Basis beschrieben, wobei das Polyacrylat zusammengesetzt ist aus 10 bis 51 Gew.-% 4-Hydroxybutylacrylat, 0-36 Gew.-% Hydroxyethyl-/Hydroxypropylmethacrylat, 28-85 Gew.-% aliphatischer oder cycloaliphatischer Ester der Methacrylsäure und 0-3 Gew.-% (Meth)acrylsäure. Das Bindemittelsystem ist hauptsächlich darauf ausgerichtet, unter Einbrennbedingungen (130 - 140°C) vergilbungsstabile, säure- und kratzfeste Überzüge zu erhalten. Bei niedrigeren Härtungstemperaturen (Raumtemperatur - 60°C) sind die Trockenzeiten zu lang.

Die US-A-5 279 862 und die US-A-5 314 953 beschreiben einen Klarlack, der auf Polyisocyanaten und (Meth)acrylcopolymerisaten basiert, wobei das Copolymerisat hergestellt wird aus Styrol, Methacrylmonomeren, ausgewählt aus der Gruppe von Methylmethacrylat, Isobornylmethacrylat, Cyclohexylmethacrylat und einer zweiten Gruppe von Methacrylmonomeren, ausgewählt aus n-Butylmethacrylat, Isobutylmethacrylat, Ethylhexylmethacrylat sowie Hydroxyalkyl(meth)acrylaten mit C1-C4-Alkylgruppen. Die Beispiele dieser Patentschriften zeigen Feststoffgehalte in der Größenordnung von nur 40 Gew.-%. Glanz und Fülle der aus den Lacken erhaltenen Überzüge sind verbesserungsbedürftig. Ein Einsatz der Bindemittel in pigmentierten Überzugsmitteln wird nicht erwähnt. Außerdem muß bei der Herstellung der Lacke das toxische Styrol eingesetzt werden.

Aufgabe der Erfindung war die Bereitstellung von styrolfreien, isocyanatvernetzenden Überzugsmitteln, die einen hohen Festkörpergehalt im spritzfertigen Zustand aufweisen, rasch trocknen und zu schleierfreien Überzügen mit hohem Glanz, hoher Brillianz und guter Fülle führen.

Die Aufgabe wird gelöst durch ein Überzugsmittel enthaltend
A) ein oder mehrere hydroxylgruppenhaltige Copolymerisate aus
   a1) 8 - 12 Gew.-% eines oder mehrerer Vinylester von alpha,alpha,dialkyl-substituierten, verzweigten, aliphatischen gesättigten Monocarbonsäuren,
   a2) 32 - 42 Gew.-% eines oder mehrerer Hydroxyalkylester der (Meth)acrylsäure,
   a3) 25 - 40 Gew.-% eines oder mehrerer Alkylester der (Meth)acrylsäure,
   a4) 12 - 24 Gew.-% eines oder mehrerer unsubstituierter oder substituierter Cycloalkylester der (Meth)acrylsäure und
   a5) 2 - 4 Gew.-% (Meth)acrylsäure
   mit einer Hydroxylzahl von 100 - 160 mg KOH/g, einer Säurezahl von 10 - 50 mg KOH/g, einem zahlenmittleren Molekulargewicht (Mn) von 1000 bis 3000 g/Mol und einer Glasübergangstemperatur (Tg) von 30 - 80°C,
B) ein oder mehrere Polyisocyanate in einem derartigen Mengenanteil, daß auf eine Hydroxylgruppe der Komponente A) 0,5 bis 2 Isocyanatgruppen entfallen, und
C) ein oder mehrere Lösemittel sowie gegebenenfalls ein oder mehrere Pigmente, Füllstoffe und/oder lackübliche Additive.

Bevorzugt liegen die Komponente A) in einer Menge von 40 - 90 Gew.-% und die Komponente B) in einer Menge von 10 - 60 Gew.-% vor. Dabei addieren sich die Gewichtsprozente der Komponenten A) und B) auf 100 Gew.-%.

Eine bevorzugte Ausführungsform der erfindungsgemäßen Überzugsmittel enthält als Komponente A) ein (Meth)acrylcopolymerisat aus
a1) 10 bis 11 Gew.-% eines oder mehrerer Vinylester von gesättigten alpha,alpha,dialkyl-substituierten verzweigten aliphatischen gesättigten Monocarbonsäuren,
a2) 35 bis 39 Gew.-% eines oder mehrerer Hydroxyalkylester der (Meth)acrylsäure,
a3) 30 bis 36 Gew.-% eines oder mehrerer Alkylester der (Meth)acrylsäure,
a4) 15 bis 18 Gew.-% eines oder mehrerer gegebenenfalls substituierter Cycloalkylester der (Meth)acrylsäure und
a5) 2 bis 4 Gew.-% (Meth)acrylsäure
mit einer Hydroxylzahl von 140 - 155 mg KOH/g, einer Säurezahl von 20 bis 30 mg KOH/g, einem zahlenmittleren Molekulargewicht (Mn) von 1200 bis 2000 und einer Glasübergangstemperatur (Tg) von 35 bis 50°C.

Der in der vorliegenden Beschreibung und den Patentansprüchen verwendete Ausdruck (Meth)acryl steht synonym für Acryl und/oder Methacryl.

In den erfindungsgemäßen Überzugsmitteln wird ein hoher Festkörpergehalt, bevorzugt von 50 bis 65 Gew.-%, besonders bevorzugt von über 55 Gew.-%, beispielsweise bis 60 Gew.-% erzielt. Es handelt sich hier um sogenannte High-Solid-Lacke. Überraschend war, daß sich die Überzugsmittel trotz des hohen Festkörpergehaltes gut verspritzen lassen und rasch trocknen.

Die Herstellung der (Meth)acrylcopolymerisate kann durch Polymerisation nach üblichen Verfahren, z.B. der Substanz-, Lösungs- oder Perlpolymerisation durchgeführt werden. Die verschiedenen Polymerisationsverfahren sind gut bekannt und beispielsweise beschrieben in Houben Weyl, Methoden der Organischen Chemie, 4. Auflage, Band 14/1, S. 24 - 255 (1961).

Das Lösungspolymerisationsverfahren wird für die Herstellung der im erfindungsgemäßen Überzugsmittel einsetzbaren (Meth)acrylcopolymerisate bevorzugt. Dabei wird das Lösemittel in das Reaktionsgefäß vorgelegt, auf Siedetemperatur geheizt und das Monomeren/Initiatorgemisch kontinuierlich in einer bestimmten Zeit zudosiert. Die Polymerisation wird bevorzugt bei Temperaturen zwischen 100°C und 160°C, vorzugsweise bei 130°C bis 150°C durchgeführt.

Die Polymerisationsreaktion kann mit bekannten Polymerisationsinitiatoren gestartet werden. Beispiele für bevorzugt eingesetzte Initiatoren für die Polymerisation sind: Dialkylperoxide, wie Di-tert.-Butylperoxid, Di-cumylperoxid, Di-tert.-Amylperoxid und Ethyl-3,3-bis(tert.-amylperoxy)-butyrat); Diacylperoxide, wie Dibenzoylperoxid, Di-lauroylperoxid; Perester, wie tert.-Butylperbenzoat, tert.-Butylperpivalat und tert.-Amylperhexanoat; Hydroperoxide, wie Cumolhydroperoxid; Azoverbindungen, wie Azo-bis-cyclohexancarbonitril und Azo-bis-isobutyronitril.

Als organische Lösemittel, die zweckmäßigerweise bei der Lösungspolymerisation sowie später auch in dem erfindungsgemäßen Überzugsmittel eingesetzt werden können, eignen sich beispielsweise: Glykolether, wie Ethylenglykoldimethylether; Propylenglykoldimethylether; Glykoletherester, wie Ethylglykolacetat, Butylglykolacetat, 3-Methoxy-n-butylacetat, Butyldiglykolacetat, Methoxypropylacetat, Ester wie Butylacetat, Isobutylacetat, Amylacetat; Ketone, wie Methylethylketon, Methylisobutylketon, Cyclohexanon, Isophoron, aromatische Kohlenwasserstoffe (z.B. mit einem Siedebereich von 136 - 180°C), aliphatische Kohlenwasserstoffe.

Zur Regelung des Molekulargewichts können Kettenüberträger, wie z.B. Mercaptane, Thioglykolsäureester, Cumol, dimeres alpha-Methylstyrol eingesetzt werden.

Die hydroxyfunktionellen (Meth)acrylcopolymerisate der Komponente A) weisen bevorzugt ein zahlenmittleres Molekulargewicht von 1000 bis 2000, besonders bevorzugt von 1200 bis 1800 g/Mol auf. Zur Herstellung der hydroxyfunktionellen (Meth)acrylcopolymerisate (Komponente A) werden als Monomerkomponente al) Vinylester von alpha,alpha-dialkylsubstituierten, verzweigten, aliphatischen gesättigten Monocarbonsäuren, bevorzugt von C5 bis C13-Monocarbonsäuren, besonders bevorzugt von C9 bis C11-Monocarbonsäuren eingesetzt, beispielsweise der Vinylester der Neodecansäure. Die Vinylester werden z.B. durch Umsetzung der vorstehend genannten gesättigten Monocarbonsäuren mit Acetylen erhalten. Sie sind kommerziell erhältlich, z.B. als Veova 9, Veova 10 (Handelsprodukt der Firma Shell).

Monomerkomponente a2) sind Hydroxyalkylester der (Meth)acrylsäure mit bevorzugt 2 bis 6 C-Atomen im Hydroxyalkylrest. Beispiele hierfür sind beta-Hydroxyethyl(meth)acrylat, beta-Hydroxypropyl(meth)acrylat, Butandiol-1,4-mono(meth)acrylat, Hexandiol-1,6-monoacrylat. Eine bevorzugte Ausführungsform der Komponente a2) besteht darin, die Hydroxyalkylester so auszuwählen, daß sich ein Verhältnis von primären zu sekundären Hydroxylgruppen von 40 : 60 bis 20 : 80 ergibt.

Monomerkomponente a3) sind von a2) unterschiedliche Alkylester der (Meth)acrylsäure mit bevorzugt 1 bis 6 C-Atomen im geradkettigen oder verzweigtkettigen im Alkoholrest. Beispiele hierfür sind Methylmethacrylat, Ethylmethacrylat, Isopropylmethacrylat, n-Butylmethacrylat, Iso-Butylmethacrylat, Ethylacrylat, n-Butylacrylat, Isobutylacrylat, tert-Butylacrylat.

Monomerkomponente a4) sind Cycloalkylester (cycloaliphatische Ester) der (Meth)acrylsäure, die substituiert sein können und bevorzugt mindestens 4 C-Atome im Alkoholrest enthalten. Besonders bevorzugt sind cycloaliphatische Ester mit 5 oder insbesondere 6 C-Atomen im Alkoholrest. Bei den Substituenten handelt es sich beispielsweise um eine oder mehrere, z.B. bis drei Alkylgruppen, insbesondere mit 1 bis 4 C-Atomen. Beispiele für die Ester sind Cyclopentyl(meth)acrylat, Cyclohexyl(meth)acrylat, tert.-Butylcyclohexyl(meth)acrylat, Trimethylcyclohexyl(meth)acrylat.

Als Komponente a5) werden Acrylsäure und/oder Methacrylsäure eingesetzt.

Der Festkörpergehalt der bei der Lösungspolymerisation erhaltenen Poly(meth)acrylatlösungen beträgt beispielsweise 55 bis 80 Gew.-%, bevorzugt 60 bis 70 Gew.-%.

Die (Meth)acrylcopolymerisate werden in den erfindungsgemäßen Überzugsmitteln mit Polyisocyanaten (Komponente B) als Vernetzungsmittel kombiniert. Der Anteil an Polyisocyanatvernetzern wird so gewählt, daß auf eine Hydroxylgruppe des (Meth)acrylcopolymeren 0,5 bis 2 Isocyanatgruppen entfallen.

Bei der Polyisocyanatkomponente B) des Überzugsmittels handelt es sich um beliebige organische Polyisocyanate mit aliphatisch, cycloaliphatisch, araliphatisch und/oder aromatisch gebundenen freien Isocyanatgruppen. Sie sind bei Raumtemperatur flüssig oder durch Zusatz organischer Lösemittel verflüssigt. Bevorzugt weisen die Polyisocyanate bei 23°C im allgemeinen eine Viskosität von 1 bis 6000 mPa.s, insbesondere über 5 und unter 3000 mPa.s auf.

Derartige Polyisocyanate sind allgemein bekannt und z.B. beschrieben in DE-A-38 29 587 oder DE-A-42 26 243.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Besonders gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI) und/oder Bis(isocyanatocyclohexyl)methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation vom überschüssigem Ausgangsdiisocyanat bis auf einen Restgehalt von weniger als 0,5 Gew.-% befreit worden sind.

Ebenfalls sehr gut geeignet sind sterisch behinderte Polyisocyanate der allgemeinen Formel 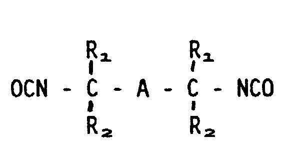 wobei R₁ = H oder R₂, R₂ = CₙH₂ₙ₊₁ mit n - 1 bis 6 sind. Die Substituenten R₁ und R₂ sind entweder linear oder verzweigt, gleich oder ungleich. Das Grundgerüst A kann aus einer einfachen Bindung, einem substituierten oder unsubstituierten aromatischen oder alicyclischen Ring oder aus einer aliphatischen linearen oder verzweigten C-Kette mit 1 bis 12 C-Atomen bestehen.

Beispiele hierfür sind 1,1,6,6-Tetramethyl-hexamethylendiisocyanat, 1,5-Dibutyl-pentamethyldiisocyanat, p- oder m-Tetramethlyxylylendiisocyanat und die entsprechenden hydrierten Homologen. Diese Diisocyanate können ebenfalls in geeigneter Weise zu höherfunktionellen Verbindungen umgesetzt werden, beispielsweise durch Trimerisierung oder durch Umsetzung mit Wasser oder Trimethylolpropan.

Ebenfalls geeignet, jedoch weniger bevorzugt sind aromatische Polyisocyanate. Beispiele hierfür sind Polyisocyanate auf Basis von 2,4-Diisocyanatotoluol oder dessen Gemischen mit 2,6-Diisocyanatoluol oder auf Basis von 4,4'-Diisocyanatodiphenylmethan sowie deren Trimerisate.

Die erfindungsgemäßen Überzugsmittel enthalten organische Lösemittel. Dabei handelt es sich beispielsweise um solche Lösemittel, wie sie bereits vorstehend zur Herstellung der Lösungspolymerisate genannt wurden.

In den erfindungsgemäßen Überzugsmitteln können Pigmente und/oder Füllstoffe enthalten sein. Als Pigmente sind alle lacküblichen Pigmente organischer oder anorganischer Natur geeignet. Beispiele für anorganische oder organische Farbpigmente und Füllstoffe sind Titandioxid, mikronisiertes Titandioxid, Eisenoxidpigmente, Zinkphosphat (Korrosionsschutzpigmente), Azopigmente, Phthalocyaninpigmente, Chinacridon- oder Pyrrolopyrrolpigmente, Ruß, Siliciumdioxid, Bariumsulfat, Talkum, Aluminiumsilikat, Magnesiumsilikat.

Die erfindungsgemäßen Überzugsmittel können zusätzlich lackübliche Hilfsstoffe enthalten. Das sind beispielsweise Verlaufsmittel auf der Basis von (Meth)acryl-Homopolymerisaten oder Silikonöle, Weichmacher wie Phosphorsäure, Phthalsäure- oder Zitronensäureester, Rheologiebeeinflusser, wie pyrogenes Siliziumdioxid, hydriertes Ricinusöl, Mikrogele, Härtungsbeschleuniger für die Vernetzungsreaktion der hydroxylfunktionellen Bindemittel mit den Polyisocyanaten, z.B. organische Metallsalze, wie Dibutylzinndilaurat, Zinknaphthenat, tertiäre Aminogruppen enthaltende Verbindungen wie Triethylamin sowie Lichtschutzmittel. Die Additive werden in üblichen, dem Fachmann geläufigen Mengen eingesetzt.

Zur Herstellung pigmentierter Überzugsmittel werden die Einzelbestandteile miteinander vermischt und in üblicher Weise homogenisiert bzw. vermahlen. Beispielsweise kann so vorgegangen werden, daß zunächst ein Teil des hydroxylgruppenhaltigen (Meth)acrylcopolymerisats mit den Pigmenten und/oder Füllstoffen sowie lacküblichen Additiven und Lösemitteln vermischt und in Mahlaggregaten angerieben wird. Danach wird das Mahlgut mit der restlichen (Meth)acrylcopolymerisatlösung komplettiert.

Kurz vor der Applikation werden die hydroxylgruppenhaltigen Bindemittel, die gegebenenfalls mit Pigmenten, Füllstoffen und lacküblichen Additiven vorliegen, mit den Polyisocyanaten gründlich vermischt. Dann wird mit organischen Lösemitteln auf Spritzviskosität eingestellt.

Die auf diese Weise hergestellten Überzugsmittel sind besonders geeignet zur Herstellung von pigmentierten oder transparenten Deckschichten sowie von Füllerschichten eines lufttrocknenden oder forciert-trocknenden Mehrschichtüberzuges. Sie können jedoch auch bei höheren Temperaturen von z.B. 80 - 140°C gehärtet werden. Sie eignen sich z.B. für die Fahrzeug- und Industrielackierung, insbesondere für die Reparaturlackierung von Fahrzeugen und Fahrzeugteilen.

Die Überzugsmittel werden nach bekannten Verfahren, wie z.B. Spritzen, Tauchen, Rollen oder Rakeln, appliziert. Beim Einsatz als transparente Klarlackschicht können sie beispielsweise nach dem Naß-in-Naß-Verfahren auf konventionelle oder wäßrige Basislacke aufgetragen werden, worauf beide Schichten gemeinsam z.B. 15 - 20 min., z.B. bei 50 - 80°C gehärtet werden. In Form einer pigmentierten Decklackschicht können sie z.B. auf übliche 1K- oder 2K-Füllerschichten aufgebracht werden. Die erfindungsgemäßen Überzugsmittel können auch als Füllerschicht beispielsweise auf übliche Grundierungen, z.B. 2K-Epoxidgrundierungen aufgebracht und bei Raumtemperatur getrocknet werden.

Die Erfindung betrifft daher auch Verfahren zur Herstellung von Mehrschichtüberzügen bzw. die Verwendung der Überzugsmittel zur Herstellung von Mehrschichtüberzügen, wobei insbesondere die Deck-, Klarlack- und/oder Füllerschichten von Mehrschichtüberzügen durch die erfindungsgemäßen Überzugsmittel erstellt werden.

Die erfindungsgemäßen Überzugsmittel weisen einen hohen Festkörpergehalt im spritzfertigen Zustand, hohe Reaktivität und kurze Trocknungszeiten auf. Sie sind problemlos verspritzbar.

Überraschend war, daß trotz des hohen Anteils an sekundären OH-Gruppen im Bindemittel diese hohe Reaktivität erzielt wurde. Ein weiterer wesentlicher Vorteil besteht in der sehr guten Pigmentbenetzung durch das (Meth)acrylatbindemittel. So läßt sich beispielsweise auch schwer dispergierbarer Ruß ohne größere Probleme dispergieren. Es ergeben sich schleierfreie und brilliante Überzüge. Die Haftung der Überzugsmittel zu darunterliegenden Lackschichten ist sehr gut.

Die Erfindung soll an den folgenden Beispielen näher erläutert werden.

### Herstellung von (Meth)acrylcopolymerisaten (Komponente A) Herstellungsbeispiel 1

In einem 6-Liter Dreihals-Schliffkolben, der mit einem Rührwerk, Kontaktthermometer, Kugelkühler und Tropftrichter ausgerüstet ist, werden 1500 g eines aromatischen Kohlenwasserstoffs mit einem Siedebereich von 164 bis 185°C und 325 g Veova 10 (Handelsprodukt der Shell AG) vorgelegt und unter Rühren bei eingeschalteter Rückflußkühlung auf 147°C geheizt. Innerhalb von 6 Stunden wird eine Mischung aus 85 g Acrylsäure, 110 g Butylmethacrylat, 145 g Isobutylmethacrylat, 775 g tert.-Butylacrylat, 500 g Cyclohexylmethacrylat, 315 g Hydroxyethylmethacrylat, 820 g 2-Hydroxypropylmethacrylat, 100 g eines aromatischen Kohlenwasserstoffs mit einem Siedebereich von 164 bis 185°C, 75 g Di-tert.-butylperoxid, 40 g tert.-Butylperoctoat und 60 g Dicumylperoxid kontinuierlich zudosiert. Anschließend wird der Ansatz 4 Stunden bei 147°C nachpolymerisiert, auf 80°C abgekühlt und mit 150 g eines aromatischen Kohlenwasserstoffs mit einem Siedebereich von 164 bis 185°C verdünnt. Die Polymerisat-Lösung hat einen Festkörper von 65,0 %, eine Viskosität von 3100 mPa.s bei 25°C, eine Säurezahl von 27,0 mg KOH/g und eine OH-Zahl von 140 mg KOH/g Festharz. Verhältnis primäre OH-Gruppen zu sekundären OH-Gruppen = 30 : 70.

### Herstellungsbeispiel 2

In einem 4-Liter Dreihals-Schliffkolben, der mit einem Rührwerk, Kontaktthermometer, Kugelkühler und Tropftrichter ausgerüstet ist, werden 750 g eines aromatischen Kohlenwasserstoffs mit einem Siedebereich von 164 bis 185°C und 162,5 g Veova 10 (Handelsprodukt der Shell AG) vorgelegt und unter Rühren bei eingeschalteter Rückflußkühlung auf 147°C geheizt. Innerhalb von 6 Stunden wird eine Mischung aus 42,5 g Acrylsäure, 55 g Butylmethacrylat, 72,5 g Isobutylmethacrylat, 382,5 g tert.-Butylacrylat, 250 g Cyclohexylmethacrylat, 105 g Hydroxyethylmethacrylat, 467,5 g 2-Hydroxypropylmethacrylat, 50 g eines aromatischen Kohlenwasserstoffs mit einem Siedebereich von 164 bis 185°C, 37,5 g Di-tert.-butylperoxid, 20 g tert.-Butylperoctoat und 30 g Dicumylperoxid kontinuierlich zudosiert. Anschließend wird der Ansatz 4 Stunden bei 147°C nachpolymerisiert, auf 80°C abgekühlt und mit 75 g eines aromatischen Kohlenwasserstoffs mit einem Siedebereich von 164 bis 185°C verdünnt. Die Polymerisat-Lösung hat einen Festkörper von 65,8 %, eine Viskosität von 3320 mPa.s bei 25°C, eine Säurezahl von 27,4 mg KOH/g und eine OH-Zahl von 140 mg KOH/g Festharz. Verhältnis primäre OH-Gruppen zu sekundären OH-Gruppen = 20 : 80.

### Herstellungsbeispiel 3

In einem 4-Liter Dreihals-Schliffkolben, der mit einem Rührwerk, Kontaktthermometer, Kugelkühler und Tropftrichter ausgerüstet ist, werden 750 g eines aromatischen Kohlenwasserstoffs mit einem Siedebereich von 164 bis 185°C und 162,5 g Veova 10 (Handelsprodukt der Shell AG) vorgelegt und unter Rühren bei eingeschalteter Rückflußkühlung auf 147°C geheizt. Innerhalb von 6 Stunden wird eine Mischung aus 42,5 g Acrylsäure, 55 g Butylmethacrylat, 72,5 g Isobutylmethacrylat, 395 g tert.-Butylacrylat, 250 g Cyclohexylmethacrylat, 210 g Hydroxyethylmethacrylat, 350 g 2-Hydroxypropylmethacrylat, 50 g eines aromatischen Kohlenwasserstoffs mit einem Siedebereich von 164 bis 185°C, 37,5 g Di-tert.-butylperoxid, 20 g tert.-Butylperoctoat und 30 g Dicumylperoxid kontinuierlich zudosiert. Anschließend wird der Ansatz 4 Stunden bei 147°C nachpolymerisiert, auf 80°C abgekühlt und mit 75 g eines aromatischen Kohlenwasserstoffs mit einem Siedebereich von 164 bis 185°C verdünnt. Die Polymerisat-Lösung hat einen Festkörper von 65,7 %, eine Viskosität von 3350 mPa.s bei 25°C, eine Säurezahl von 29,8 mg KOH/g und eine OH-Zahl von 140 mg KOH/g Festharz. Verhältnis primäre OH-Gruppen zu sekundären OH-Gruppen = 40 : 60.

### Beispiel 4

### Herstellung eines Klarlackes

96 Gew.-Teile der Copolymerisatlösung aus Herstellungsbeispiel 1 werden mit 4 Gew.-Teilen Butylacetat 98/100 % vermischt. Anschließend werden in einem gereinigten trockenen Behälter folgende Bestandteile gründlich miteinander vermischt:

| | |
|---|---|
| 88 Gew.-Teile | der vorstehend hergestellten Mischung aus der Copolymerisatlösung und Butylacetat, |
| 2,6 Gew.-Teile | Butylacetat 98/100 %, |
| 7,3 Gew.-Teile | Ethoxypropylacetat, |
| 1,2 Gew.-Teile | eines handelsüblichen Lichtschutzmittels, |
| 0,48 Gew.-Teile | Diethanolamin und |
| 0,36 Gew.-Teile | eines handelsüblichen Verlaufsmittels |

### Beispiel 5

### Herstellung von pigmentierten Decklacken

### a) weißer Decklack

Zunächst werden 96 Gew.-Teile der Copolymerisatlösung aus Herstellungsbeispiel 1 mit 4 Gew.-Teilen Butylacetat 98/100 % vermischt. Dann werden 26 Gew.-Teile der so erhaltenen Copolymerisatlösung mit 2,5 Gew.-Teilen eines handelsüblichen Netzmittels, 1,5 Gew.-Teilen eines handelsüblichen Antiabsetzmittels und 2 Gew.-Teilen Butylacetat 98/100 % gut vermischt und anschließend 35,2 Gew.-Teile Titandioxid eingerührt. Die Mischung wird dann mittels üblicher Dispergierverfahren dispergiert. Danach wird mit einer Bindemittellösung aus 28,7 Gew.-Teilen der im 1. Schritt erhaltenen Copolymerisatlösung, 2,5 Gew.-Teilen Butylglykolacetat, 1 Gew.-Teil eines handelsüblichen Netzmittels und 0,5 Gew.-Teilen Dimethylethanolamin komplettiert.

### b) schwarzer Decklack

Zunächst werden 96 Gew.-Teile der Copolymerisatlösung aus Herstellungsbeispiel 1 mit 4 Gew.-Teilen Butylacetat 98/100 % vermischt. Dann werden 13,5 Gew.-Teile der so erhaltenen Copolymerisatlösung mit 3,6 Gew.-Teilen eines handelsüblichen Netzmittels und 0,6 Gew.-Teilen eines handelsüblichen Antiabsetzmittels gut miteinander vermischt. Anschließend werden 2,3 Gew.-Teile Ruß eingerührt. Die Mischung wird mittels üblicher Dispergierverfahren dispergiert. Danach wird mit einer Bindemittellösung aus 78,5 Gew.-Teilen der im 1. Schritt erhaltenen Copolymerisatlösung, 1 Gew.-Teil eines handelsüblichen Verlaufsmittel und 0,5 Gew.-Teilen Dimethylethanolamin komplettiert.

### Beispiel 6

### Herstellung einer Härterlösung (Komponente B)

Es wurde folgende Härterlösung bereitet:

| | |
|---|---|
| 50 Gew.-Teile | eines aliphatischen Polyisocyanats auf der Basis von Hexamethylendiisocyanat, |
| 10 Gew.-Teile | Xylol-Isomerengemisch, |
| 23 Gew.-Teile | Solvesso 100^{R} (Kohlenwasserstoffgemisch, Siedebereich 164 - 180°C) |
| 4 Gew.-Teile | Methoxypropylacetat, |
| 9 Gew.-Teile | n-Butylacetat (98 %ig), |
| 3,85 Gew.-Teile | Ethoxypropylacetat, |
| 0,15 Gew.-Teile | Dibutylzinndilaurat-Lösung (10 %ig). |

### Applikation der erhaltenen Überzugsmittel

Der vorstehend bereitete Klarlack aus Beispiel 4 und die pigmentierten Decklacke aus Beispiel 5 werden jeweils kurz vor der Verarbeitung mit der Härterlösung aus Beispiel 6 im Volumenverhältnis 2 : 1 vermischt.

Die so erhaltenen Klarlacke werden durch Spritzauftrag in einer Trockenschichtdicke von 40 - 60 µm im Naß-in-Naß-Verfahren auf eine lösemittelbasierende Basislackschicht aufgebracht und nach einer Ablüftphase von 5 Minuten 30 Minuten bei 60°C gehärtet. Die pigmentierten Decklacke werden analog auf eine übliche lösemittelbasierende 2K-Füllerschicht aufgebracht und ebenfalls 30 Minuten bei 60°C gehärtet. Die Ergebnisse der lacktechnischen Untersuchungen sind in der folgenden Tabelle dargestellt.

| **Lacktechnische Untersuchungen** | | | |
|---|---|---|---|
| | Klarlack | Decklack/weiß | Decklack/schwarz |
| Festkörpergehalt | 55 Gew.-% | 65 Gew.-% | 58 Gew.-% |
| Staubtrocknung nach DIN 53 150 | 20 min. | 30 min. | 40 min. |

| Lufttrocknung (16 Stunden bei 20°C) | | | |
|---|---|---|---|
| Klebefreiheit | + | + | + |
| Fülle/Glanz | + | + | + |
| Verlauf | + | + | + |

| Ofentrocknung (30 Minuten bei 60°C) | | | |
|---|---|---|---|
| Klebefreiheit | + | + | + |
| warm | | | |
| Klebefreiheit | + | + | + |
| kalt | | | |
| Fülle/Glanz | + | + | + |
| Verlauf | + | + | + |
| + = sehr gut | | | |

## Patentansprüche

1. Überzugsmittel, enthaltend
A) ein oder mehrere hydroxylgruppenhaltige Copolymerisate aus
a1) 8 - 12 Gew.-% eines oder mehrerer Vinylester von alpha,alpha,dialkyl-substituierten, verzweigten, aliphatischen gesättigten Monocarbonsäuren,
a2) 32 - 42 Gew.-% eines oder mehrerer Hydroxyalkylester der (Meth)acrylsäure,
a3) 25 - 40 Gew.-% eines oder mehrerer Alkylester der (Meth)acrylsäure,
a4) 12 - 24 Gew.-% eines oder mehrerer unsubstituierter oder substituierter Cycloalkylester der (Meth)acrylsäure und
a5) 2 - 4 Gew.-% (Meth)acrylsäure
mit einer Hydroxylzahl von 100 - 160 mg KOH/g, einer Säurezahl von 10 - 50 mg KOH/g, einem zahlenmittleren Molekulargewicht (Mn) von 1000 bis 3000 g/Mol und einer Glasübergangstemperatur (Tg) von 30 - 80°C,
B) ein oder mehrere Polyisocyanate in einem derartigen Mengenanteil, daß auf eine Hydroxylgruppe der Komponente A) 0,5 bis 2 Isocyanatgruppen entfallen, und
C) ein oder mehrere Lösemittel sowie gegebenenfalls ein oder mehrere Pigmente, Füllstoffe und/oder lackübliche Additive.

2. Überzugsmittel nach Anspruch 1 mit einem Festkörpergehalt von 50 bis 65 Gew.-%.

3. Überzugsmittel nach Anspruch 1 oder 2, worin die hydroxylgruppenhaltigen Copolymerisate der Komponente A) ein zahlenmittleres Molekulargewicht von 1000 bis 2000 g/Mol aufweisen.

4. Überzugsmittel nach einem der Ansprüche 1 bis 3, dadurch gekennzeichnet, daß es pigmentfrei als Klarlack formuliert ist.

5. Überzugsmittel nach einem der Ansprüche 1 bis 4, dadurch gekennzeichnet, daß die Komponente a2) ein Gemisch von Hydroxyalkylestern mit primären und sekundären Hydroxylgruppen entsprechend einem Zahlenverhältnis von primären zu sekundären Hydroxylgruppen von 40 : 60 bis 20 : 80 enthält.

6. Verfahren zur Mehrschichtlackierung eines Substrats durch Auftrag von mindestens zwei Überzugsschichten, dadurch gekennzeichnet, daß zur Herstellung einer Füllerschicht und/oder einer pigmentierten oder transparenten Deckschicht ein Überzugsmittel nach einem der Ansprüche 1 bis 4 verwendet wird.

7. Verfahren nach Anspruch 6, dadurch gekennzeichnet, daß es zur Mehrschichtlackierung von Fahrzeugen und Fahrzeugteilen durchgeführt wird.

8. Verfahren nach Anspruch 6, dadurch gekennzeichnet, daß es zur Reparaturlackierung von Fahrzeugen und Fahrzeugteilen durchgeführt wird.

9. Verwendung der Überzugsmittel nach einem der Ansprüche 1 bis 5 bei der Herstellung von Mehrschichtlackierungen.

10. Verwendung der Überzugsmittel nach einem der Ansprüche 1 bis 5 bei der Reparaturlackierung von Fahrzeugen und Fahrzeugteilen.

## Claims

1. Coating composition containing
A) one or more hydroxyl group-containing copolymers prepared from
a1) from 8 to 12 wt.% of one or more vinyl esters of alpha,alpha-dialkyl-substituted branched-chain aliphatic saturated monocarboxylic acids,
a2) from 32 to 42 wt.% of one or more hydroxyalkyl esters of (meth)acrylic acid,
a3) from 25 to 40 wt.% of one or more alkyl esters of (meth)acrylic acid,
a4) from 12 to 24 wt.% of one or more unsubstituted or substituted cycloalkyl esters of (meth)acrylic acid and
a5) from 2 to 4 wt.% (meth)acrylic acid
having a hydroxyl value of 100 to 160 mg KOH/g, an acid value of 10 to 50 mg KOH/g, a number-average molecular weight (Mn) of 1000 to 3000 g/mol and a glass transition temperature (Tg) of from 30 to 80°C,
B) one or more polyisocyanates in a constituent amount such that there are present from 0.5 to 2 isocyanate groups per hydroxyl group of the component A), and
C) one or more solvents as well as optionally one or more pigments, surfacers and/or additives conventionally used in lacquers.

2. Coating composition according to Claim 1 having a solids content of from 50 to 65 wt.%.

3. Coating composition according to Claim 1 or 2, in which the hydroxyl group-containing copolymers of the component A) have a number-average molecular weight of 1000 to 2000 g/mol.

4. Coating composition according to one of Claims 1 to 3, characterised in that it is formulated without pigment as a clear lacquer.

5. Coating composition according to one of Claims 1 to 4, characterised in that the component a2) contains a mixture of hydroxyalkyl esters having primary and secondary hydroxyl groups corresponding to a numerical ratio of primary to secondary hydroxyl groups of from 40 : 60 to 20 : 80.

6. Process for providing a substrate with a multi-film coating by the application of at least two coating films, characterised in that a coating composition according to one of Claims 1 to 4 is used in order to produce a surfacer film and/or a pigmented or transparent top coat.

7. Process according to Claim 6, characterised in that it is carried out in order to provide vehicles and vehicle components with a multi-film coating.

8. Process according to Claim 6, characterised in that it is carried out in order to refinish vehicles and vehicle components.

9. Use of the coating compositions according to one of Claims 1 to 5 in the production of multi-film coatings.

10. Use of the coating compositions according to one of Claims 1 to 5 in the refinishing of vehicles and vehicle components.

## Revendications

1. Produit de revêtement contenant
A) un ou plusieurs copolymères à groupes hydroxy de
a1) 8 à 12 % en poids d'un ou plusieurs esters vinyliques d'acides monocarboxyliques aliphatiques saturés, alpha, alpha-dialkylsubstitués et ramifiés,
a2) 32 à 42 % en poids d'un ou plusieurs esters hydroxyalkyliques de l'acide (méth)acrylique,
a3) 25 à 40 % en poids d'un ou plusieurs esters alkyliques de l'acide (méth)acrylique,
a4) 12 à 24 % en poids d'un ou plusieurs esters cycloalkyliques substitués ou non de l'acide (méth)acrylique et
a5) 2 à 40 % en poids d'acide (méth)acrylique,
avec un indice d'hydroxyle de 100 à 160 mg de KOH/g, un indice d'acide de 10 à 50 mg de KOH/g, un poids moléculaire moyen, moyenne en nombre, Mn, de 1000 à 3000 g/mol et une température de transition du second ordre, Tg, de 30 à 80°C,
B) un ou plusieurs polyisocyanates, en quantité telle que l'on dispose de 0,5 à 2 groupes isocyanate par groupe hydroxy du composant A), et
C) un ou plusieurs solvants et le cas échéant un ou plusieurs composants choisis parmi les pigments, les matières de charge et/ou les additifs usuels pour peintures et vernis.

2. Produit de revêtement selon la revendication 1, à une teneur en matières solides de 50 à 65 % en poids.

3. Produit de revêtement selon la revendication 1 ou 2, dans lequel les copolymères à groupes hydroxy du composant A) ont un poids moléculaire moyen, moyenne en nombre, de 1000 à 2000 g/mol.

4. Produit de revêtement selon l'une des revendications 1 à 3, caractérisé en ce qu'il est sous la forme de vernis clair, exempt de pigment.

5. Produit de revêtement selon l'une des revendications 1 à 4, caractérisé en ce que le composant a2) contient un mélange d'esters hydroxyalkyliques à groupes hydroxy primaires et secondaires dans des proportions correspondant à un rapport de 40:60 à 20:80 entre le nombre des groupes hydroxy primaires et le nombre des groupes hydroxy secondaires.

6. Procédé pour l'application d'un revêtement à couches multiples sur un support par application d'au moins deux couches de revêtement, caractérisé en ce que, pour l'application d'une couche de mastic et/ou d'une couche de couverture pigmentée ou transparente, on utilise un produit de revêtement selon l'une des revendications 1 à 4.

7. Procédé selon la revendication 6, caractérisé en ce qu'il est mis en oeuvre pour l'application de revêtements à couches multiples sur des véhicules et pièces de véhicules.

8. Procédé selon la revendication 6, caractérisé en ce qu'il est mis en oeuvre pour le revêtement de réparation de véhicules et pièces de véhicules.

9. Utilisation des produits de revêtement selon l'une des revendications 1 à 5 pour l'application de revêtements à couches multiples.

10. Utilisation des produits de revêtement selon l'une des revendications 1 à 5 pour le revêtement de réparation de véhicules et pièces de véhicules.
